Europäisches Patentamt

European Patent Office

Office européen des brevets

(11) Numéro de publication : **0 451 755 B1**

(12) **FASCICULE DE BREVET EUROPEEN**

(45) Date de publication du fascicule du brevet :
**11.05.94 Bulletin 94/19**

(51) Int. Cl.[5] : **B01D 71/02**

(21) Numéro de dépôt : **91105516.8**

(22) Date de dépôt : **08.04.91**

(54) **Membrane semi-perméable composite inorganique poreuse et procédé de préparation.**

(30) Priorité : **12.04.90 FR 9004755**

(43) Date de publication de la demande :
**16.10.91 Bulletin 91/42**

(45) Mention de la délivrance du brevet :
**11.05.94 Bulletin 94/19**

(84) Etats contractants désignés :
**AT BE CH DE DK ES FR GB IT LI NL SE**

(56) Documents cités :
**EP-A- 0 022 558**
**EP-A- 0 331 459**
**FR-A- 2 018 179**
**FR-A- 2 575 396**
**US-A- 4 186 384**

(73) Titulaire : **ALUMINUM COMPANY OF AMERICA**
**1501 Alcoa Building Mellon Square**
**Pittsburgh, PA 15219 (US)**

(72) Inventeur : **Huis in't Veld, Marcel B.J., c/o TWENTE UNIVERSITY**
**OF TECHNOLOGY, Faculty of Chemical Technology**
**P.O. Box 217, NL-7500 AE Enschede (NL)**
Inventeur : **Uhlhorn, Robert J.R., c/o TWENTE UNIVERSITY**
**OF TECHNOLOGY, Faculty of Chemical Technology**
**P.O. Box 217, NL-7500 AE Enschede (NL)**
Inventeur : **Lin, Yue-Sheng, c/o TWENTE UNIVERSITY**
**OF TECHNOLOGY, Faculty of Chemical Technology**
**P.O. Box 217, NL-7500 AE Enschede (NL)**
Inventeur : **Keizer, Klaas, c/o TWENTE UNIVERSITY**
**OF TECHNOLOGY, Faculty of Chemical Technology**
**P.O. Box 217, NL-7500 AE Enschede (NL)**
Inventeur : **Burggraaf, Anthonie J., c/o TWENTE UNIVERSITY**
**OF TECHNOLOGY, Faculty of Chemical Technology**
**P.O. Box 217, NL-7500 AE Enschede (NL)**

(74) Mandataire : **Weinmiller, Jürgen et al**
**Lennéstrasse 9 Postfach 24**
**D-82336 Feldafing (DE)**

## Description

La présente invention concerne une membrane semi-perméable composite inorganique poreuse, comprenant un support macroporeux et une couche mince de séparation composée de plusieurs oxydes inorganiques et ayant un diamètre moyen de pores inférieur à un micron.

Les membranes, composées d'une superposition de plusieurs couches avec différentes tailles de pores, et où la couche de séparation est celle qui a le plus petit diamètre de pores et qui est située au niveau de la surface de la membrane, sont appelées membranes composites.

Les membranes composites sont bien connues :

Ainsi les brevets US-A 4.711.719 et US-A 4.562.021 décrivent des procédés de fabrication de membranes avec une couche de séparation en $Al_2O_3$. On prépare pour cela un sol contenant des particules de boehmite ($AlOOH$), dont la taille est comprise entre 3nm et $2\mu m$, en suspension dans une phase liquide comprenant de l'eau, un acide tel que $HNO_3$ ou $HClO_4$ et éventuellement un agent épaississant, tel que l'alcool polyvinylique. On met en contact cette suspension avec le support pour déposer une couche qui est ensuite séchée et chauffée, jusqu'à ce que la boehmite soit transformée en alumine et que les particules d'alumine soient frittées pour former une couche constituant un corps poreux en alumine, solidement accroché au support.

Dans tout l'exposé qui va suivre, on s'intéresse à la stabilité thermique de ces couches. On appelle stabilité thermique la propriété des structures poreuses dont la dimension des cristaux ou des grains, la surface spécifique et le diamètre des pores, évoluent peu avec un chauffage à haute température.

Or, quand les couches définies plus haut sont utilisées à haute température, on constate une stabilité insuffisante de la taille de leurs pores. Ceci est dû au fait que le corps poreux est un corps intrinsèquement métastable : toute mobilité des atomes, ou des groupes d'atomes, a tendance à diminuer l'énergie de surface par abaissement de la surface spécifique.

Pratiquement cette tendance est la cause de la croissance des grains avec pour conséquences l'augmentation de la taille des pores et parfois la diminution du pourcentage de la fraction volumique de pores. Cet effet est mentionné dans les brevets US-A 4.711.719 et US-A 4.562.021 qui décrivent comment la taille des pores de la couche finale peut être augmentée par simple accroissement de la température de frittage. Si la mobilité des atomes, ou des groupes d'atomes, à une température donnée est suffisante pour entraîner la croissance des grains et l'accroissement du diamètre des pores pendant l'opération de frittage qui ne dure généralement que quelques heures, la stabilité de la dimension des pores de la couche ne peut être maintenue, pendant une utilisation pratique de la membrane sur les périodes de plusieurs milliers d'heures, que si la température d'utilisation est considérablement plus basse que la température de frittage. Cela signifie que la température d'utilisation est limitée à une valeur trop basse pour de nombreuses applications.

Le problème de l'insuffisance de la stabilité thermique se pose essentiellement avec les membranes à faible diamètre de pores, c'est-à-dire de diamètre inférieur à 50nm. En effet on constate qu'une membrane en alumine frittée à 1400°C, avec un diamètre de pores de 1 $\mu m$, peut être maintenue très longtemps à 800°C, sans changement notable du diamètre de ses pores.

Pour les membranes à petits pores, c'est-à-dire avec de petits grains d'oxyde, la source principale de mobilité des atomes est la diffusion au niveau de la surface libre des grains et au niveau des joints de grains.

On rencontre un problème analogue avec les catalyseurs, ou les supports de catalyseurs, en alumine-gamma présentant une haute surface spécifique : quand ces catalyseurs sont utilisés à haute température pendant de longues périodes, la surface spécifique diminue, le diamètre des grains augmente, et l'alumine-gamma se transforme en alumine alpha. Ceci diminue la surface disponible pour la catalyse ou pour loger un catalyseur finement dispersé. Ceci réduit donc l'efficacité du catalyseur.

On a déjà proposé d'imprégner de tels supports de catalyseur en alumine-gamma par une solution d'un sel d'un oxyde différent de $Al_2O_3$, l'imprégnation étant suivie d'un séchage et d'une calcination; ceci aboutit à la formation d'un autre oxyde dans les pores du support de catalyseur ou sur leur surface. On constate que la stabilité thermique du catalyseur est accrue lorsque l'on met en oeuvre un sel de zirconium, de calcium, de lanthane ou de thorium, mais qu'elle diminue lorsque l'on utilise un sel d'indium ou de gallium.

Si l'on applique un tel procédé à la couche de séparation d'une membrane, on observe les inconvénients suivants :

- L'imprégnation amène l'oxyde d'imprégnation sur la surface libre des grains formant la couche, mais pas sur les joints de grains; par conséquent il n'a pas d'effet sur la mobilité des atomes aux joints de grains.
- Le procédé d'imprégnation implique, en plus de l'imprégnation proprement dite, une opération de séchage et une opération de cuisson, ce qui est coûteux.

La présente invention a pour but de réaliser une membrane semi-perméable composite inorganique poreuse, sans fissures, et stable à haute température.

2

La présente invention a pour objet une membrane semi-perméable composite inorganique poreuse munie d'un support et d'une couche de séparation ayant des pores dont le diamètre moyen est inférieur à 1 μm et comprenant au moins deux oxydes métalliques réfractaires, caractérisée par le fait :

- que cette couche de séparation est composée de grains d'une phase d'un premier oxyde, et d'au moins un second oxyde qui est dispersé et chimiquement lié à ladite phase du premier oxyde, de manière à constituer au moins en partie d'une part la surface libre desdits grains de ladite phase et d'autre part leurs joints de grains,
- que ledit premier et ledit second oxydes sont choisis de manière que ledit second oxyde ralentisse la diffusion au niveau de la surface libre des grains et au niveau des joints de grains de ladite phase du premier oxyde et ait à haute température une faible solubilité dans ladite phase,
- et que le volume dudit second oxyde est compris entre 0,1 % et 25 % du volume de ladite phase du premier oxyde.

Une telle couche de séparation a une stabilité thermique plus grande qu'une couche de séparation similaire comprenant seulement des grains de ladite phase dudit premier oxyde.

Avantageusement ledit premier oxyde est choisi parmi $Al_2O_3$, $TiO_2$, $ZrO_2$, $HfO_2$ et un oxyde mixte comportant au moins un des oxydes précédents.

Ledit second oxyde est alors choisi parmi $ZrO_2$, $HfO_2$, $La_2O_3$, $ThO_2$, CaO, et un oxyde mixte comportant au moins un des oxydes précédents.

Le second oxyde peut être dispersé de diverses manières sur la surface libre et dans les joints de grains de ladite phase du premier oxyde. Bien que l'observation d'un tel état de dispersion soit presque impossible dans la pratique, le degré de recouvrement de la surface peut être défini en termes d'épaisseur équivalente du second oxyde.

Le degré de recouvrement de la surface des grains du premier oxyde correspond de préférence à moins d'une monocouche d'atomes du métal du second oxyde avec les atomes d'oxygène associés; cette fraction de monocouche est présente sur la surface libre des grains du premier oxyde et au niveau de ses joints de grains. Le degré de recouvrement est noté SCI (Surface Coverage Index); il est égal à 1 dans le cas d'une monocouche, et inférieur à 1 dans le cas d'une fraction de monocouche.

La stabilité thermique plus élevée des membranes selon l'invention est due à la présence du second oxyde qui ralentit la diffusion de l'oxyde du premier métal au niveau de sa surface libre et des joints de grains; elle ralentit également la croissance des grains de l'oxyde du premier métal et l'augmentation de la taille des pores dans la couche de séparation, qui est causée par cette croissance. Toutefois la couche de séparation est encore un système instable du point de vue thermodynamique et, si elle est chauffée à une température suffisamment élevée, l'oxyde du second métal se regroupe en cristaux, et les grains d'oxyde du premier métal grossissent. La stabilité thermique d'une membrane selon l'invention est donc limitée à un domaine de température au-dessus duquel la diffusion est suffisante pour regrouper les atomes du second oxyde en cristaux.

Puisque le second oxyde est choisi de manière à avoir une faible solubilité dans la phase du premier oxyde, il subsiste en quantité constante sur la surface spécifique décroissante de la phase du premier oxyde; sa concentration exprimée en SCI croît et, avec elle, son efficacité relative vis-à-vis de la diffusion.

La présente invention a également pour objet un procédé de réalisation de la couche de séparation de la membrane précédente, procédé comportant les étapes suivantes :

- on prépare un sol stable de particules de la phase dudit premier oxyde, ou de l'hydroxyde correspondant,
- on lui ajoute au moins un composé d'au moins un métal susceptible de former ledit second oxyde, ce composé étant capable d'être mélangé avec la phase liquide dudit sol de façon homogène, de manière que l'on obtienne une barbotine,
- on met en contact le support inorganique micropreux avec ladite barbotine pour déposer ladite couche de séparation,
- on sèche cette couche et on la chauffe à une température telle que ledit hydroxyde peut être converti en oxyde si c'est le cas, et que ledit premier et ledit second oxydes sont frittés ensemble pour former une structure microporeuse où ledit second oxyde est dispersé sur la surface libre des grains dudit premier oxyde et dans ses joints de grains.

Quand on dit que le composé dudit second métal ajouté au sol doit pouvoir être mélangé de façon homogène dans la phase liquide dudit sol, cela signifie :

- que ce composé se dissout dans cette phase liquide et reste à l'état dissous,
- ou que ce composé se dissout puis précipite sur la surface des particules colloïdales du sol,
- ou que ce composé réagit avec un des constituants du sol, le produit de la réaction précipitant ensuite sur la surface des particules colloïdales du sol.

Dans tous les cas où il se produit une précipitation, cette dernière ne commence qu'après un certain temps qui doit être suffisant pour permettre un mélange homogène du composé ajouté avec le sol.

Si le second oxyde est un oxyde mixte, il peut être formé par deux méthodes.

La première méthode est la réaction avec le premier oxyde de l'oxyde dérivé du métal dont un composé a été ajouté au sol. Par exemple, si on ajoute un composé de lanthane dans la phase liquide du sol, et bien que l'oxyde $La_2O_3$ ne soit pas stable en présence d'$Al_2O_3$ à haute température, l'oxyde binaire $La_2O_3$, $11Al_2O_3$ est stable dans ces conditions et constitue ledit second oxyde.

La seconde méthode est la formation de cet oxyde mixte à partir de plusieurs composés solubles de différents métaux ajoutés au sol.

D'autres caractéristiques et avantages de la présente invention apparaîtront au cours de la description suivante de diverses variantes de réalisation données à titre illustratif, mais nullement limitatif. Dans le dessin, les figures très schématiques en coupe très agrandie montrent les diverses manières selon lesquelles le second oxyde d'un métal $M_2$ est dispersé sur la surface libre et dans les joints de grains de la phase du premier oxyde d'un métal $M_1$.

- La figure 1A montre un grain d'oxyde du métal $M_1$ avec sa surface libre (art antérieur)
- La figure 1B montre deux grains d'oxyde du métal $M_1$ avec leur joint de grain (art antérieur)
- La figure 2A montre un grain d'oxyde du métal $M_1$ avec sa surface libre recouverte d'une monocouche d'oxyde du métal $M_2$ selon l'invention.
- La figure 2B montre deux grains d'oxyde du métal $M_1$ avec une monocouche d'oxyde du métal $M_2$ au niveau de leur joint de grain selon l'invention.
- Les figures 3A et 3B sont analogues aux figures 2A et 2B, mais avec deux monocouches d'oxyde du métal $M_2$.
- La figure 4A est analogue à la figure 2A, mais la surface libre du grain d'oxyde du métal $M_1$ n'est que partiellement recouverte d'une monocouche d'oxyde du métal $M_2$.
- La figure 4B est analogue à la figure 2B, mais le joint de grain ne comprend qu'une fraction de monocouche d'oxyde du métal $M_2$.
- Les figures 5A et 5B sont analogues aux figures 4A et 4B, mais avec seulement quelques atomes du métal $M_2$ dispersés.

Dans toutes ces figures on a désigné par les mêmes nombres de référence des éléments analogues.

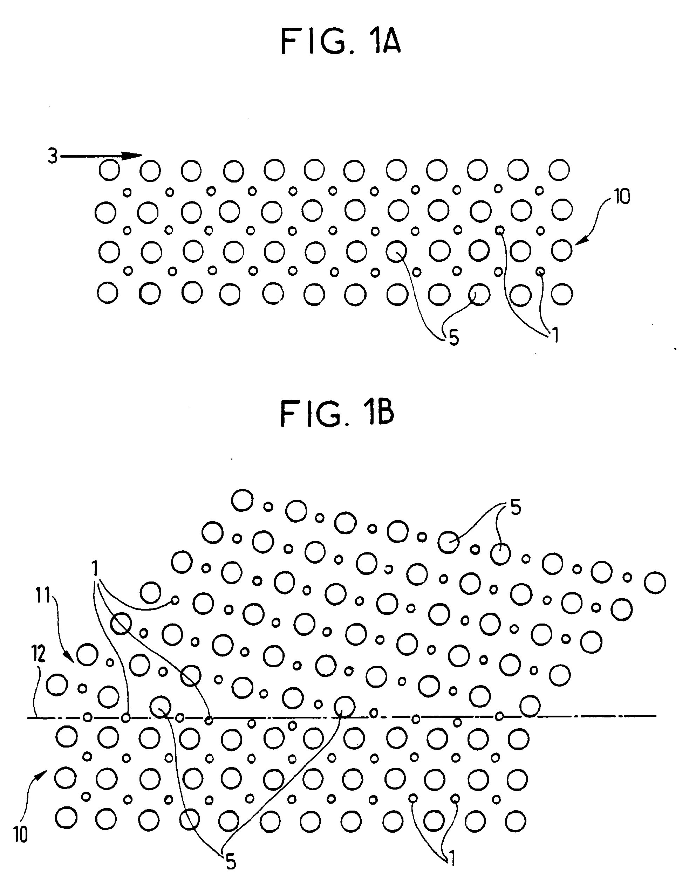

La figure 1A illustre un grain 10 en un oxyde du premier métal $M_1$ avec ses atomes 1 et des atomes d'oxygène 5; la surface libre du grain 10 est référencée 3.

Dans la figure 1B on voit ce même grain 10 lié à un grain 11 du même type, avec leur joint de grain 12.

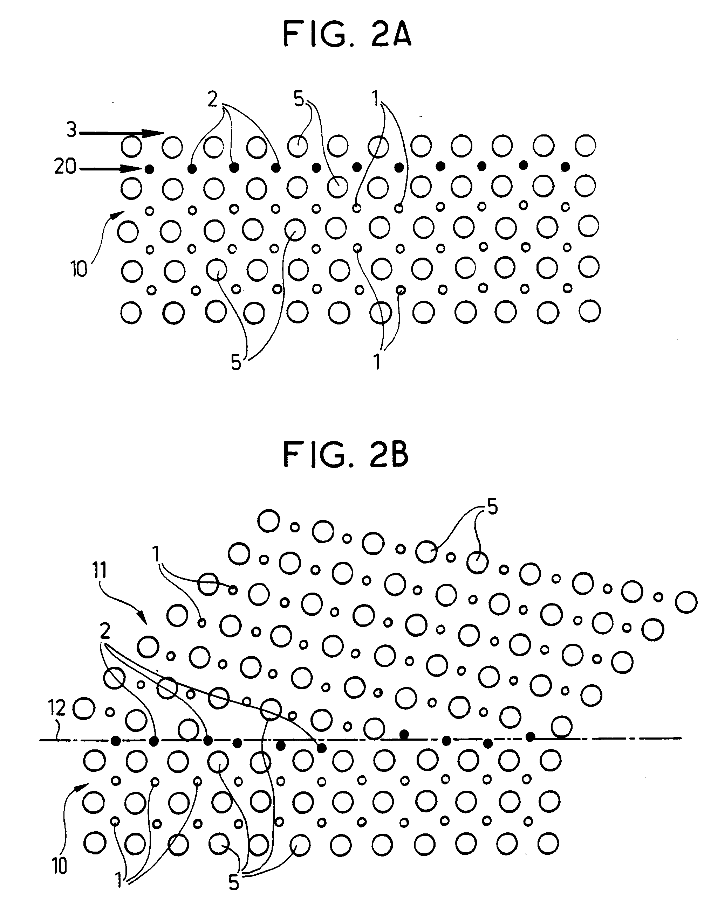

Dans la figure 2A, la surface du grain est recouverte selon l'invention d'une monocouche 20 de l'oxyde du second métal $M_2$, dont les atomes sont référencés 2. Dans la figure 2B, c'est le joint de grain 12 qui comprend une monocouche de l'oxyde du second métal $M_2$. Le degré SCI défini plus haut est égal à 1 dans le cas des figures 2A et 2B.

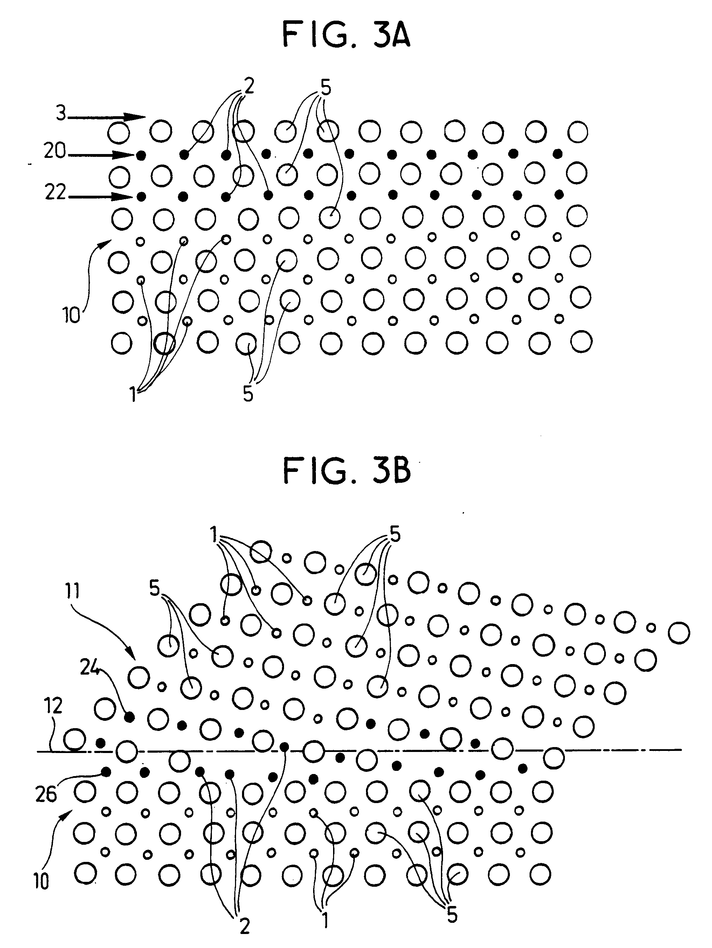

Dans les figures 3A et 3B, l'oxyde du second métal $M_2$ se trouve sous la forme de deux monocouches 20 et 22 sur la surface libre du grain 10, ou de deux monocouches 24 et 26 au niveau du joint de grain 12, on a alors un degré SCI supérieur à 1.

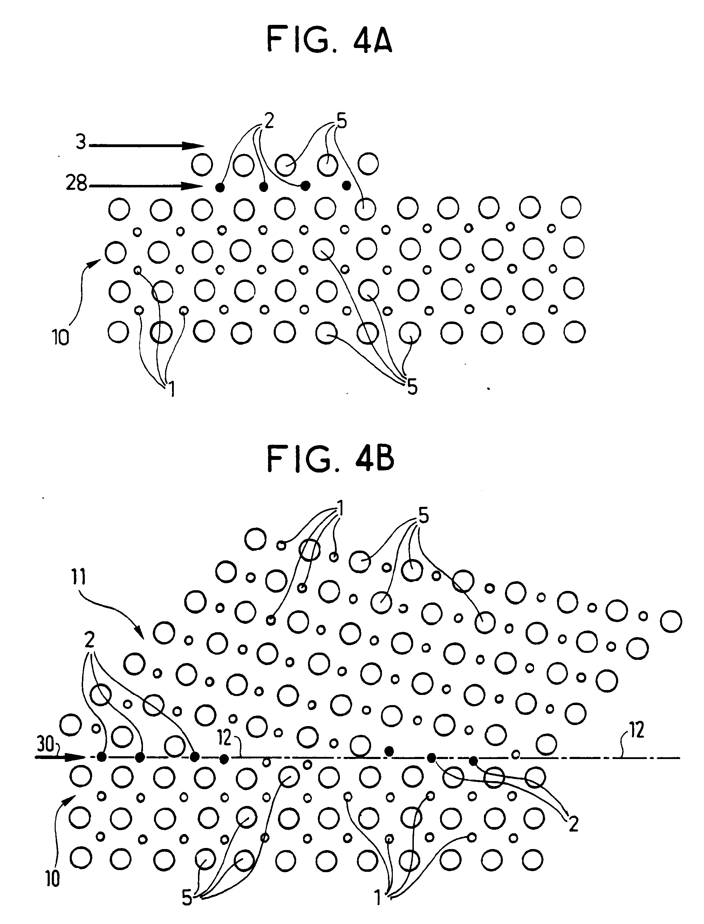

Dans les figures 4A et 4B l'oxyde du métal $M_2$ n'est présent que sous la forme d'une fraction de monocouche, telles que les monocouches 28 et 30. Le degré SCI est alors inférieur à 1.

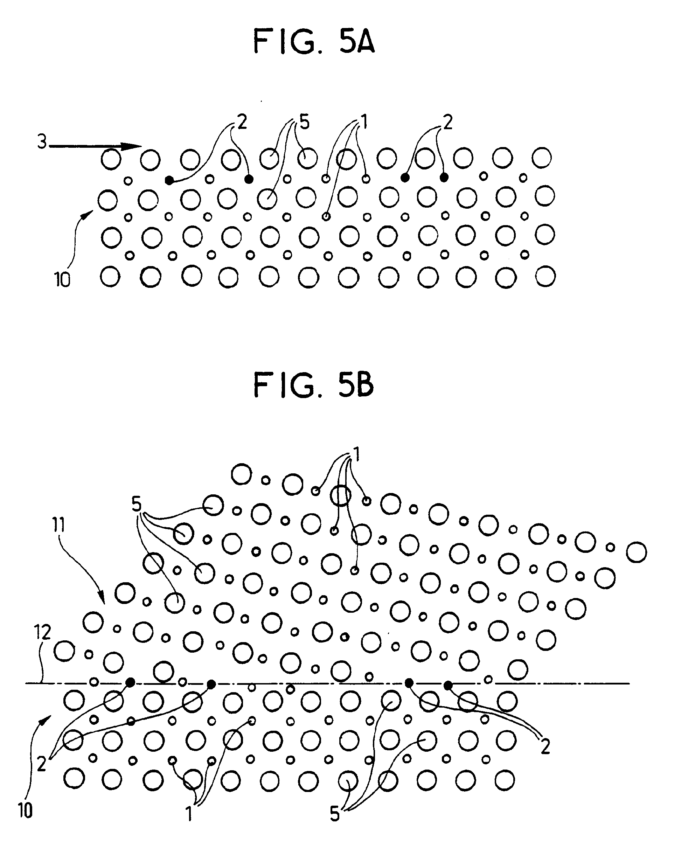

Dans les figures 5A et 5B on est en présence d'atomes 2 de métal $M_2$ dispersés sur la surface libre du grain 10 ou au niveau du joint de grain 12. Le degré SCI est encore inférieur à 1.

On trouvera ci-dessous six exemples de mise en oeuvre.

## EXEMPLE I

On prépare un sol de boehmite dont la phase liquide contient un composé de zirconium en solution.

Pour cela on mélange 1 mole de tri-sec-butoxyde d'aluminium avec deux litres d'eau à 85°C, ce qui précipite la boehmite. Après évaporation du butanol formé, on ajoute au sol 0,08 mole de $ZrOCl_2$, $8H_2O$; le sol est placé sous reflux pendant 3 jours.

Avec cette barbotine on dépose une couche sur la surface interne d'un support tubulaire poreux en alumine. Ce support a une couche externe de 2 mm d'épaisseur avec un diamètre de pores de $10\mu m$ et une couche interne de $50\mu m$ d'épaisseur avec un diamètre de pores de $0,2\mu m$. Pour cela le tube est rempli de barbotine et vidé après un temps de contact de 5 secondes. La couche déposée sur la surface interne du tube est ensuite séchée à 40°C, chauffée lentement (30°C/heure) jusqu'à des températures variées comprises entre 600°C et 900°C, la température finale étant maintenue pendant 3 heures; la couche est ensuite refroidie.

La couche formée à l'intérieur du tube a une épaisseur de 3 microns, et est exempte de fissures. La taille de ses pores peut être mesurée par la méthode d'adsorption de $N_2$, utilisant le modèle à pores à forme de fentes décrit par Leenaars dans le brevet US-A 4.711.719 et dans la publication "The preparation and characterization of alumina membranes with ultra-fine pores"- Journal of Materials Science, vol 19 (1984), P. 1077-1088.

La stabilité thermique de cette couche selon l'invention est comparée à celle d'une couche similaire de l'art antérieur préparée d'une manière analogue, sauf en ce qui concerne l'addition de $ZrOCl_2$, $8H_2O$.

La taille des pores (en nanomètres ) a été mesurée après des traitements thermiques pendant 3 heures à 600°C, et pendant 3 heures à 900°C.

Ces résultats ainsi que le degré SCI sont repris dans le tableau I.

TABLEAU I

|  | 600°C – 3 h | 900°C – 3 h |
|---|---|---|
| Couche selon l'invention | 2.6 nm  SCI ⟨ 0,45 | 3 nm  SCI ⟨ 0,5 |
| Couche art antérieur | 2.6 nm | 5 nm |

On voit que la couche selon l'invention a une bien meilleure stabilité à haute température que la couche correspondante de l'art antérieur. Dans cet exemple la présence du second oxyde bloque pratiquement la croissance de la taille des pores entre 600°C et 900°C.

L'ordre de grandeur du degré SCI indiquée dans le tableau I est estimé de la manière suivante :

- La couche est composée de petites plaquettes allongées d'alumine gamma, dont l'épaisseur e est égale approximativement à la taille des pores en forme de fentes. Ceci est démontré par Leenaars dans l'article "The preparation and characterization of alumina membranes with ultra-fine pores, Journal of Materials Science, vol 19 (1984) pages 1077-1088).
- Dans un cristal de zircone, l'épaisseur d'un plan d'atomes de zirconium avec les atomes d'oxygène associés est approximativement égale à 0,3 nm.
- La proportion V de volume de zircone par rapport au volume d'alumine, telle que la Zircone recouvre les deux faces d'une plaquette idéale d'alumine d'épaisseur e avec une monocouche d'atomes de zirconium avec les atomes d'oxygène associés est :

$$V = 2 \times \frac{0,3}{e} \text{ (avec e exprimée en nanomètres)}$$

Connaissant la masse spécifique de la zircone cristalline ($\simeq$ 6g/cm³) et celle de l'alumine gamma ($\simeq$ 3,2 g/cm³) et leurs masses molaires (123,2 pour $ZrO_2$ et 102 pour $Al_2O_3$ ou 51 pour $AlO_{1,5}$), le rapport de la concentration molaire dans la barbotine de zirconium [ Zr ] à celle de l'aluminium [ Al ] peut être facilement converti en un degré de recouvrement SCI tel que :

$$SCI = \frac{[Zr]}{[Al]} \times \frac{123,2}{51} \times \frac{3,2}{6} \times \frac{e}{2 \times 0,3} = 2,15 \frac{[Zr]}{[Al]} \times e$$

Cette estimation est faite en supposant que, durant les étapes de dépôt de la couche et de séchage, le composé du métal $M_2$ présent dans la barbotine ne migre pas dans la sous-couche ou le support.

Puisque cela n'est pas complètement vrai, la valeur réelle du degré SCI est égale ou inférieure à la valeur obtenue par le calcul précédent.

L'examen au microscope électronique des couches selon l'invention après traitement thermique à des températures variées montre que des particules de $ZrO_2$ présentant une taille de 10 nm sont visibles dans les couches traitées à 1000°C; par contre aucune particule de $ZrO_2$ n'est visible dans les couches traitées à 600°C, 700°C, 800°C et 900°C, bien que $ZrO_2$ soit présent dans ces couches.

Ceci indique que, pour des températures de traitement comprises entre 600°C et 900°C, la Zircone présente dans la couche est si bien dispersée qu'elle n'est pas visible au microscope électronique, alors que, pour une température de 1000°C, la diffusion est suffisamment importante pour regrouper au moins une partie de la zircone en particules observables.

## EXEMPLE II

On prépare une couche selon l'invention suivant la même procédure que dans l'exemple I, mais en remplaçant 0,08 mole de $ZrOCl_2$, $8H_2O$ par 0,08 mole de $ZrO(NO_3)_2$ . Après dépôt de la couche, séchage et traitement thermique, on obtient les mêmes tailles de pores que dans l'exemple I : 2,6 nm après 3 heures à 600°C, et 3 nm après 3 heures à 900°C. Le degré SCI estimé pour la couche traitée à 600°C est inférieur ou égal à 0,45.

## EXEMPLE III

On prépare une couche selon l'invention suivant la même procédure que dans l'exemple I, mais en remplaçant l'oxychlorure de zirconium par de l'oxychlorure d'hafnium. Après dépôt de la couche, séchage et traitement thermique, on obtient des tailles de pores analogues à celles de l'exemple I : 2,7 nm après 3 heures à 600°C, et 3,1 nm après 3 heures à 900°C. Le degré SCI estimé pour la couche traitée à 600°C est inférieur ou égal à 0,45.

## EXEMPLE IV

On prépare une couche selon l'invention suivant la même procédure que dans l'exemple I, mais en remplaçant 0,08 mode d'oxychlorure de Zirconium par 0,04 mode d'oxychlorure de Zirconium et 0,04 mole d'oxychlorure d'hafnium. Après dépôt de la couche, séchage et traitement thermique, on obtient les mêmes tailles de pores que dans l'exemple I. Le degré SCI estimé pour la couche traitée à 600°C est inférieur ou égal à 0,45.

## EXEMPLE V

On prépare une couche selon l'invention suivant la même procédure que dans l'exemple I, mais en remplaçant 0,08 mole d'oxychlorure de zirconium par 0,03 mode de nitrate de lanthane La $(NO_3)_3$.

La couche est séchée et traitée thermiquement à différentes températures. La taille de ses pores est comparée à celle des pores d'une couche réalisée sans addition de nitrate de lanthane. Les résultats obtenus sont consignés dans le tableau II.

## TABLEAU II

| TRAITEMENT THERMIQUE | Taille des pores (nm) | |
|---|---|---|
| | Art antérieur | avec La(NO3)3 |
| 600°C – 15 h | 3 | 3 |
| 1 000°C – 30 h | 8 | 6 |
| 1 100°C – 30 h | 90 | 11 |
| 1 200°C – 30 h | 120 | 24 |

La présence de nitrate de lanthane accroît donc de façon remarquable la stabilité thermique de la couche.

Dans ce cas le degré SCI (basé sur $La_2O_3$) peut être estimé à une valeur inférieure ou égale à 0,3 après un traitement à 600°C.

A de plus hautes températures, le traitement thermique entraîne un accroissement substantiel de la taille des pores (x8) avec une diminution sensible de la surface spécifique. Cette diminution provoque un accroissement sensible du degré SCI puisqu'une quantité constante d'oxyde $La_2O_3$, insoluble dans l'alumine, couvre une surface en diminution.

Dans cet exemple la présence de $La_2O_3$ diminue le grossissement des grains et des pores, même dans un domaine de température où cette croissance des grains est très importante,

## EXEMPLE VI

On prépare des couches selon l'invention selon la même procédure que dans l'exemple I, mais où l'on remplace l'oxychlorure de zirconium par du nitrate de zirconium, du nitrate de lanthane ou du nitrate de calcium.

On obtient les résultats suivants :

| ADDITIF | RAPPORT MOLAIRE GLOBAL DANS LA BARBOTINE | TRAITEMENT THERMIQUE | TAILLE DES PORES *** (nm) | SCI ESTIME |
|---|---|---|---|---|
| NEANT | | 600°C - 15h | 3,2 | - |
| NEANT | | 900°C - 15 h | 5,2 | - |
| Zr(NO3)4 | Zr/Al= 0,0124 | 900°C - 15 h | 3,3 | ↙ 0,08 |
| La (NO3)3 | La/Al= 0,009 | 900°C - 15 h | 4,3 | ↙ 0,07* |
| Ca (NO3)2 | Ca/Al= 0,027 | 900°C - 15 h | 4,9 | ↙ 0,17** |

\* basé sur $La_2O_3$.  \*\*\* calcul par le modèle des pores en forme

\*\* basé sur CaO.  de fentes.

Cet exemple montre que l'efficacité du procédé selon l'invention dépend de la nature de l'oxyde choisi.

Les membranes selon l'invention trouvent des applications à haute température, et en particulier :
- La filtration des gaz à haute température pour en extraire des particules solides ou liquides
- La séparation des gaz à haute température par le procédé de la diffusion de Knudsen, ou un procédé analogue.
- Les réactions catalytiques couplées avec une membrane de séparation dans les réacteurs à membrane catalytique.

Les membranes selon l'invention peuvent aussi être utilisées pour la filtration des liquides ou des gaz et pour la séparation des gaz à basse température.

## Revendications

1. Membrane semi-perméable composite inorganique poreuse munie d'un support et d'une couche de séparation ayant des pores dont le diamètre moyen est inférieur à 1μm et comprenant au moins deux oxydes métalliques réfractaires, caractérisée par le fait
    - que cette couche de séparation est composée de grains d'une phase d'un premier oxyde, et d'au moins un second oxyde qui est dispersé et chimiquement lié à ladite phase du premier oxyde, de manière à constituer au moins en partie d'une part la surface libre desdits grains de ladite phase et d'autre part leurs joints de grains,
    - que ledit premier et ledit second oxydes sont choisis de manière que ledit second oxyde ralentisse

7

la diffusion au niveau de la surface libre des grains et au niveau des joints de grains de ladite phase du premier oxyde et ait à haute température une faible solubilité dans ladite phase,

- et que le volume dudit second oxyde est compris entre 0,1 % et 25 % du volume de ladite phase du premier oxyde.

**2.** Membrane composite selon la revendication 1, caractérisée par le fait que ledit premier oxyde est choisi parmi $Al_2O_3$, $TiO_2$, $ZrO_2$, $HfO_2$ et un oxyde mixte comportant au moins un des oxydes précédents.

**3.** Membrane composite selon l'une des revendications 1 à 2, caractérisée par le fait que ledit second oxyde est choisi parmi $ZrO_2$, $HfO_2$, $La_2O_3$, $ThO_2$, $CaO$ et un oxyde mixte comportant au moins un des oxydes précédents.

**4.** Membrane composite selon l'une des revendications 1 à 3, caractérisée par le fait que le degré de recouvrement au niveau de ladite surface libre des grains ou des joints de grains de ladite première phase par ledit second oxyde correspond à moins d'une monocouche d'atomes du métal du second oxyde avec les atomes d'oxygène associés.

**5.** Procédé de préparation de la couche de séparation d'une membrane semi-perméable composite inorganique poreuse selon l'une des revendications 1 à 4, caractérisé par le fait qu'il comporte les étapes suivantes :
   - on prépare un sol stable de particules de la phase dudit premier oxyde,
   - on réalise une barbotine en ajoutant au moins un composé d'au moins un métal susceptible de former ledit second oxyde, ce composé étant tel qu'il se dissout dans la phase liquide dudit sol et reste à l'état dissous ou qu'il se dissout puis précipite sur la surface des particules colloïdales de sol ou encore qu'il réagit avec un des constituants du sol, le produit de la réaction prècipitant ensuite sur la surface des particules colloïdales du sol,
   - on met en contact le support inorganique microporeux avec ladite barbotine pour déposer ladite couche de séparation,
   - on sèche cette couche et on la chauffe à une température telle que ledit premier et ledit second oxydes sont frittés ensemble pour former une structure microporeuse où ledit second oxyde est dispersé sur la surface libre des grains dudit premier oxyde et dans ses joints de grains.

**6.** Procédé de préparation de la couche de séparation d'une membrane semi-perméable composite inorganique poreuse selon l'une des revendications 1 à 4, caractérisé par le fait qu'il comporte les étapes suivantes :
   - on prépare un sol stable de particules de l'hydroxyde correspondant à la phase dudit premier oxyde,
   - on réalise une barbotine en ajoutant au moins un composé d'au moins un métal susceptible de former ledit second oxyde, ce composé étant tel qu'il se dissout dans la phase liquide dudit sol et reste à l'état dissous ou qu'il se dissout puis précipite sur la surface des particules colloïdales de sol ou encore qu'il réagit avec un des constituants du sol, le produit de la réaction prècipitant ensuite sur la surface des particules colloïdales du sol,
   - on met en contact le support inorganique microporeux avec ladite barbotine pour déposer ladite couche de séparation,
   - on sèche cette couche et on la chauffe à une température telle que ledit hydroxyde peut être converti en oxyde, et que ledit premier et ledit second oxydes sont frittés ensemble pour former une structure microporeuse où ledit second oxyde est dispersé sur la surface libre de la phase des grains dudit premier oxyde et dans ses joints de grains.

**Patentansprüche**

**1.** Halbdurchlässige anorganische poröse Verbundmembran mit einem Träger und einer Trennschicht, deren mittlerer Porendurchmesser geringer als 1 µm ist und die mindestens zwei hitzebeständige Metalloxide aufweist, dadurch gekennzeichnet, daß
   - diese Trennschicht aus Körnern einer Phase eines ersten Oxids und mindestens einem zweiten Oxid besteht, das dispergiert und chemisch mit der Phase des ersten Oxids verbunden ist, um zumindest teilweise einerseits die freie Oberfläche dieser Körner der Phase und andererseits ihre Übergangsstellen zwischen Körnern zu bilden,

- das erste und das zweite Oxid derart gewählt werden, daß das zweite Oxid die Diffusion in Höhe der freien Oberfläche der Körner und in Höhe der Körnerübergangsstellen der Phase des ersten Oxids verlangsamt und bei hoher Temperatur eine geringe Lösbarkeit in dieser Phase hat,
- und daß das Volumen des zweiten Oxids zwischen 0,1% und 25% des Volumens der Phase des ersten Oxids beträgt.

2. Verbundmembran nach Anspruch 1, dadurch gekennzeichnet, daß das erste Oxid ausgewählt wird aus $Al_2O_3$ $TiO_2$, $ZrO_2$, $HfO_2$ und einem Mischoxid, das mindestens eines der erwähnten Oxide enthält.

3. Verbundmembran nach einem der Ansprüche 1 und 2, dadurch gekennzeichnet, daß das zweite Oxid ausgewählt wird aus $ZrO_2$, $HfO_2$, $La_2O_3$, $ThO_2$, $CaO$ und einem Mischoxid, das mindestens eines der vorhergehenden Oxide aufweist.

4. Verbundmembran nach einem der Ansprüche 1 bis 3, dadurch gekennzeichnet, daß der Grad an Bedeckung in Höhe der freien Oberfläche der Körner oder der Übergangsstellen zwischen Körnern der ersten Phase durch das zweite Oxid weniger als einer Monoschicht von Atomen des Metalls des zweiten Oxids mit den zugehörigen Sauerstoffatomen entspricht.

5. Verfahren zur Herstellung der Trennschicht einer halbdurchlässigen anorganischen porösen Verbundmembran nach einem der Ansprüche 1 bis 4, dadurch gekennzeichnet, daß es die folgenden Schritte aufweist:
- man bereitet ein stabiles Sol an Partikeln der Phase des ersten Oxids vor,
- man stellt einen Schlamm her, indem man mindestens eine Verbindung mindestens eines Metalls, das das zweite Oxid bilden kann, hinzufügt, wobei diese Verbindung so gewählt ist, daß sie sich in der flüssigen Phase des Sols auflöst und im gelösten Zustand bleibt oder sich auflöst und dann auf der Oberfläche der kolloidalen Partikel des Sols absetzt oder aber daß sie mit einem der Bestandteile des Sols reagiert, wobei das Reaktionsprodukt sich dann auf der Oberfläche der kolloidalen Partikel des Sols absetzt,
- man bringt den mikroporösen anorganischen Träger mit diesem Schlamm in Kontakt, um die Trennschicht aufzubringen,
- man trocknet diese Schicht und erwärmt sie auf eine solche Temperatur, daß das erste und das zweite Oxid gemeinsam gesintert werden, um eine mikroporöse Struktur zu bilden, in der das zweite Oxid auf der freien Oberfläche der Körner des ersten Oxids und in den Übergangsstellen der Körner dispergiert wird.

6. Verfahren zur Herstellung der Trennschicht einer halbdurchlässigen anorganischen porösen Verbundmembran nach einem der Ansprüche 1 bis 4, dadurch gekennzeichnet, daß es die folgenden Schritte aufweist:
- man bereitet ein stabiles Sol an Partikeln des der Phase des ersten Oxids entsprechenden Hydroxids vor,
- man stellt einen Schlamm her, indem man mindestens eine Verbindung mindestens eines Metalls, das das zweite Oxid bilden kann, hinzufügt, wobei diese Verbindung so gewählt ist, daß sie sich in der flüssigen Phase des Sols auflöst und im gelösten Zustand bleibt oder sich auflöst und dann auf der Oberfläche der kolloidalen Partikel des Sols absetzt oder aber daß sie mit einem der Bestandteile des Sols reagiert, wobei das Reaktionsprodukt sich dann auf der Oberfläche der kolloidalen Partikel des Sols absetzt,
- man bringt den mikroporösen anorganischen Träger mit diesem Schlamm in Kontakt, um die Trennschicht aufzubringen,
- man trocknet diese Schicht und erwärmt sie auf eine solche Temperatur, daß das Hydroxid in Oxid umgewandelt werden kann, und daß das erste und das zweite Oxid gemeinsam gesintert werden, um eine mikroporöse Struktur zu bilden, in der das zweite Oxid auf der freien Oberfläche der Körner des ersten Oxids und in den Übergangsstellen der Körner dispergiert wird.

**Claims**

1. A porous inorganic composite semipermeable membrane provided with a support and a separating layer which has pores with an average diameter less than 1 $\mu$m and which comprises at least two refractory metal oxides, said membrane being characterized in that:

said separating layer is composed of grains of a first oxide phase and grains of at least one second oxide which is dispersed over and chemically bonded to the first oxide phase, so as to constitute at least a portion of the free surface of the grains of said first oxide phase and at least a portion of the grain boundaries between the grains of said first oxide phase;

said first oxide phase and said second oxide are chosen so that the second oxide slows down diffusion both at the surface and at the grain boundary of the first oxide phase and has low solubility in said first oxide phase; and

the volume of said second oxide lies in the range of 0.1% to 25% of the volume of said first oxide phase.

2. A composite membrane according to claim 1, characterized by the fact that said first oxide phase is chosen from $Al_2O_3$, $TiO_2$, $ZrO_2$, $HfO_2$ and a mixed oxide containing at least one of the preceding oxides.

3. A composite membrane according to claim 1 or 2, characterized by the fact that said second oxide is chosen from $ZrO_2$, $HfO_2$, $La_2O_3$, $ThO_2$, $CaO$ and a mixed oxide containing at least one of the preceding oxides.

4. A composite membrane according to any one of claims 1 to 3, characterized by the fact that the degree of coverage at the free surface of the grains and at the grain boundaries of said first oxide phase by said second oxide corresponds to at least one monolayer of atoms of the metal of the second oxide with their associated oxygen atoms.

5. A method of preparing the separating layer of a porous inorganic composite semipermeable membrane according to any one of claims 1 to 4, characterized by the fact that method comprises the following steps:

preparing a stable sol of particles of said first oxide phase;

producing a slip by adding to this sol at least one compound of at least one metal capable of forming said second oxide, this compound being such that it disolves in the liquid phase of said sol and remains in the dissolved state, or it dissolves and then precipitates on the surface of the colloidal particles of the sol, or else it reacts with one of the constituants of the sol, the product of the reaction subsequently precipitating on the surface of the colloidal particles of the sol;

putting the microporous inorganic support into contact with said slip to deposit said separating layer; and

drying this layer and heating it to a temperature such that said first oxide phase and said second oxide are sintered together to form a microporous structure in which said second oxide is dispersed both on the free surface of the grains of the first oxide phase and in the grain boundaries thereof.

6. A method of preparing the separating layer of a porous inorganic composite semipermeable membrane according to any one of claims 1 to 4, characterized by the fact that said method comprises the following steps:

preparing a stable sol of hydroxide particles corresponding to said first oxide phase;

producing a slip by adding to this sol at least one compound of at least one metal capable of forming said second oxide, this compound being such that it disolves in the liquid phase of said sol and remains in the dissolved state, or it dissolves and then precipitates on the surface of the colloidal particles of the sol, or else it reacts with one of the constituants of the sol, the product of the reaction subsequently precipitating on the surface of the colloidal particles of the sol;

putting the microporous inorganic support into contact with said slip to deposit said separating layer; and

drying this layer and heating it to a temperature such that said hydroxide is converted to oxide, and such that said first oxide phase and said second oxide are sintered together to form a microporous structure in which said second oxide is dispersed both on the free surface of the grains of the first oxide phase and in the grain boundaries thereof.

# FIG. 1A

# FIG. 1B

EP 0 451 755 B1

# FIG. 2A

# FIG. 2B

12

EP 0 451 755 B1

# FIG. 3A

# FIG. 3B

13

# FIG. 4A

# FIG. 4B

# FIG. 5A

# FIG. 5B